# EUROPEAN PATENT APPLICATION

(11) **EP 4 295 980 A1**
(43) Date of publication of application: **27.12.2023**
(21) Application number: 23179329.0
(22) Date of filing: 14.06.2023
(51) Int. Cl.: B23B 51/08

(54) **ROTARY DRILLING TOOL AS WELL AS METHOD FOR PRODUCING A THROUGH-HOLE**

(30) Priority: 22.06.2022 DE 102022115490
(71) Applicant: KENNAMETAL INC., Latrobe, PA 15650 (US)
(72) Inventor: KAUPER, Herbert, Latrobe, PA 15650 (US); PAUL, Marcus, Latrobe, PA 15650 (US); SCHWAEGERL, Juergen, Latrobe, PA 15650 (US)
(74) Representative: Prinz & Partner mbB

(57) **Abstract**

A rotary drilling tool (10) has a cutting head (12) with at least one tip (22) and a front-facing main cutting edge (24) defining a maximum diameter (D) of the cutting head (12). The cutting head (12) has an undercut (38) with a radially inwardly springing ledge (44) with a rear-facing blade (42) provided for cutting when pulling the rotary drilling tool (10) out of a workpiece.

Method for producing a through-hole in a workpiece by means of such a rotary drilling tool (10).

## Description

The invention relates to a rotary drilling tool having an axis of rotation, a shaft, and a cutting head with at least one tip and a front-facing main cutting edge defining a maximum diameter of the cutting head. Furthermore, the invention relates to a method for producing a through-hole in a workpiece, in particular made from a fibrous material, by means of such a rotary drilling tool.

Such rotary drilling tools are known and are commonly used in order to drill bores such as blind holes or through-bores into workpieces. The quality of the bore is highly dependent on the quality of the cutting edges of the rotary drilling tool.

In the production of through-holes, the quality of the outlet opening at the axial end of the through-hole will decrease significantly even after a short time. In the case of fibrous materials, in particular carbon fiber-reinforced plastics, this results in fibers not being cut, or not being completely cut, at the outlet opening upon the exit of the rotary drilling tool from the workpiece, and thus protruding into the outlet opening of the finished drilled through-hole.

The problem addressed by the invention is therefore to provide a rotary drilling tool by means of which through-holes of particularly high quality can be produced. The problem addressed by the invention is further to provide a method for producing a through-hole by means of such a rotary drilling tool.

The problem is solved by a rotary drilling tool having an axis of rotation, a shaft, and a cutting head with at least one tip and a front-facing main cutting edge defining a maximum diameter of the cutting head. The cutting head has a tip-side axial portion, a shaft-side axial portion, and at least one undercut extending axially between the tip-side axial portion and the shaft-side axial portion. The undercut has a radially inwardly springing ledge with a rear-facing blade on a side facing away from the tip, which edge is provided for cutting when pulling the rotary drilling tool out of a workpiece.

According to the present invention, it has been discovered that, by means of the rear-facing blade, the through-hole and in particular the outlet opening are machined a second time by the rotary drilling tool when the rotary drilling tool is pulled out of the through-hole. Thus, portions of the workpiece are cut that were not cut during drilling by means of the main cutting edge. In this way, through-holes of particularly high quality can be produced with little effort. In particular in the case of fibrous materials such as carbon fiber-reinforced plastics, through-holes can be reliably produced in this manner, in which no fibers protrude into the outlet opening of the finished through-hole. The rear-facing blade is specially configured so as to machine the workpiece during removal due to the arrangement on the side facing away from the tip.

In particular, the rear-facing blade is arranged due to the undercut such that the rear-facing blade is protected by the main cutting edge when drilling, i.e., in the feeding direction, and does not cut portions of the workpiece protruding into the through-hole until the rotary drilling tool is pulled out. Thus, the wear on the rear-facing blade is reduced, and the tool life of the rotary drilling tool is increased during which through-holes of particularly high quality can be produced.

In one embodiment, the tip-side axial portion extends axially from the inwardly springing ledge towards the main cutting edge and has the maximum diameter. This radially guides the rotary drilling tool in a targeted manner in the bore so that a high-quality bore is reliably ensured.

In a further embodiment, the rear-facing blade extends from a radially outer end of the rear-facing blade to a radially inner end of the rear-facing blade. The radially outer end has a first radial distance from the axis of rotation corresponding to half the maximum diameter and the radially inner end has a second radial distance from the axis of rotation that is less than 45% of the maximum diameter. As a result, the rear-facing blade extends radially as far outward as the main cutting edge and thus ensures that the drill-hole wall machined by the rear-facing blade has the same radius as the drill-hole wall machined by the main cutting edge. Further, the rear-facing blade extends radially far enough inward so that portions of the workpiece protruding into the through-hole reliably engage with the rear-facing blade and are cut when the rotary drilling tool is pulled out of the workpiece.

Additionally or alternatively, the axial distance between the inwardly springing ledge and the main cutting edge can correspond to at least 10% of the maximum diameter in order to ensure a particularly good guidance of the cutting head in the bore.

Further, it can be provided that the rear-facing blade has a rear-facing cutting edge formed by a rear-facing chipping surface and a rear-facing free surface. The rear-facing free surface is inclined in relation to a plane that is perpendicular to the axis of rotation. With this design, portions of the workpiece protruding into the through-hole are in particular reliably separated by the rear-facing blade when the rotary drilling tool is pulled out.

The rear-facing free surface can be inclined radially in relation to the plane by an angle of between 1° and 5°, and/or the rear-facing free surface can be inclined circumferentially in relation to the plane by an angle of between 5° and 10° in order to ensure a targeted machining by means of the rear-facing blade.

According to one embodiment, the undercut has an axial length corresponding to at least 10% of the maximum diameter. In this manner, portions of the workpiece that protrude into the through-hole are in particular effectively engaged by the rear-facing blade when the rotary drilling tool is pulled out and are reliably separated.

According to a further embodiment, the undercut is part of a constriction, in particular having a V-shaped or U-shaped profile, whereby the rotary drilling tool can be produced in particular simply, in particular when the rotary drilling tool comprises a plurality of rear-facing blades.

According to the invention, a method for producing a through-hole in a workpiece, in particular made from a fibrous material, is also provided by means of a rotary drilling tool according to the invention, having the aforementioned advantages. The method comprises the following steps:
a) drilling the through-hole by means of the at least one main cutting edge by driving the rotary drilling tool in a direction of rotation and moving into the workpiece in a feeding direction, and
b) machining the resulting drill-hole wall by means of the at least one rear-facing blade by driving the rotary drilling tool in the direction of rotation and moving out of the workpiece counter to the feeding direction.

It can be provided that, during drilling, the rotary drilling tool is moved through the workpiece with an overrun. The overrun is large enough that the rear-facing blade exits the through-hole in the feeding direction. Thus, it is ensured that the portions of the workpiece protruding into the through-hole at the outlet opening also engage with the rear-facing blade when the rotary drilling tool is pulled out and are reliably separated.

Further advantages and features will emerge from the following description and from the accompanying drawings. The figures show:
- Figure 1 in a side view, a rotary drilling tool according to the invention, with a cutting head,
- Figure 2 in a plan view, the cutting head of the rotary drilling tool of Fig. 1,
- Figure 3 in a further side view, the rotary drilling tool of Fig. 1 for representing the dimensions, and
- Figures 4 to 6 a method according to the invention for producing a through-hole in a workpiece by means of the rotary drilling tool of Fig. 1.

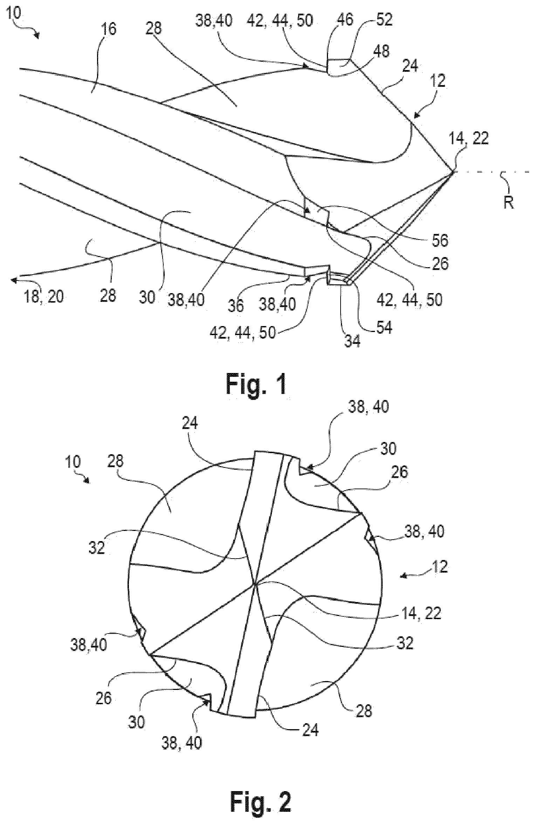

In Fig. 1, a rotary drilling tool 10 is shown extending along a longitudinal central axis defining an axis of rotation R of the rotary drilling tool 10.

The rotary drilling tool 10 has a cutting head 12 arranged at an axial end 14 of the rotary drilling tool 10 and a base body 16 having a shaft 18 arranged at the opposite axial end 20 of the rotary drilling tool 10 and by means of which the rotary drilling tool 10 is mountable in a tool holder. The shaft 18 and the opposite axial end 20 lie outside the section of the rotary drilling tool 10 shown in Fig. 1. Their position relative to the section of the rotary drilling tool 10 shown is therefore indicated by means of the arrows.

In the present embodiment, the rotary drilling tool 10 is a helical drill in which the cutting head 12 has a tip 22, two main cutting edges 24 (see Fig. 2), and two ancillary cutting edges 26.

The rotary drilling tool 10 correspondingly comprises two helical main flutes 28 and two helical ancillary flutes 30, each of which axially extend from the associated main cutting edge 24 and ancillary cutting edge 26 up to the shaft 18.

In an alternative embodiment, the rotary drilling tool 10 can be any rotary drilling tool, in particular any drill. Here, the rotary drilling tool 10 can have any number of major cutting edges 24, but at least one. The ancillary cutting edges 26 are optional and, in an alternative embodiment, can be omitted or provided in any number.

Additionally or alternatively, the rotary drilling tool 10 can have a replaceable cutting head 12 that, together with the base body 16, forms the rotary drilling tool 10.

In the present embodiment, the tip 22 is formed by two cross-cuts 32 interconnecting the two main cutting edges 24.

In an alternative embodiment, the tip 22 can be arbitrary in design. In particular, the cutting head 12 can have more than one tip 22. In other words, in the sense of the invention, the term "tip" is not associated with any particular geometry, but rather the term generally refers to the axial end 14, which is arranged opposite to the shaft 18.

The cutting head 12 is formed, for example, from a carbide.

Further, the cutting head 12 has a tip-side axial portion 34, a shaft-side axial portion 36, and four undercuts 38, each of which are associated with one of the main cutting edges 24 or ancillary cutting edges 26 and extend axially from the tip-side axial portion 34 to the shaft-side axial portion 36.

The undercuts 38 are part of a constriction 40, which extends circumferentially completely around the cutting head 12 and is interrupted by the flutes 28, 30.

The constriction 40 has a V-shaped profile or cross-sectional profile.

Of course, in an alternative embodiment, the constriction 40 can have any profile, for example a U-shaped profile.

In a further alternative embodiment, the rotary drilling tool 10 has any number of undercuts 38, but at least one. This means, in particular, that no separate undercut 38 must be provided for each main cutting edge 24 or ancillary cutting edge 26.

Further, the undercut 38 can be arranged at any location in the circumferential direction and/or in the axial direction. That is to say, the undercut 38 associated with a main cutting edge 24 or an ancillary cutting edge 26 need not abut the corresponding flute 28, 30 of the main cutting edge 24 or ancillary cutting edge 26.

In the present embodiment, the undercuts 38 are identical or analogous in design to one another.

In the following, the design of an undercut 38 associated with a main cutting edge 24 is exemplified for all undercuts 38.

Generally, each undercut 38 can be individually designed as long as it has a rear-facing blade 42, as explained below.

The rear-facing blade 42 is part of a radially inwardly springing ledge 44 of the undercut 38 that axially abuts the tip-side axial portion 34. More specifically, the rear-facing blade 42 is arranged on the side of the ledge 44 that faces away from the tip 22.

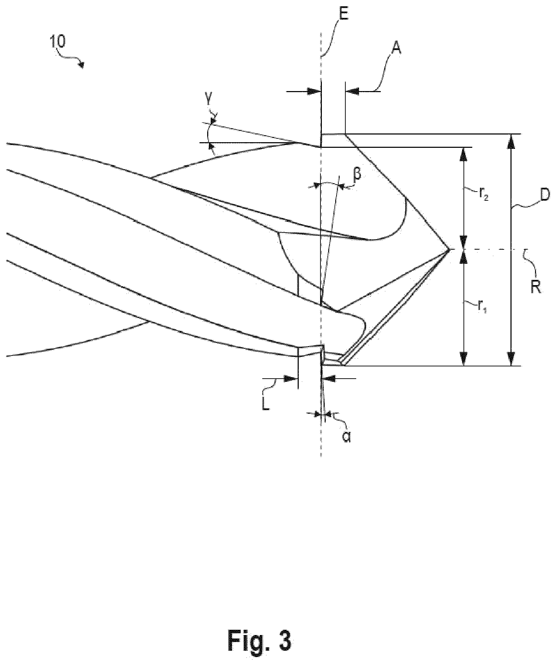

In this context, the tip-side axial portion 34 extends in the axial direction up to the associated main cutting edge 24 and has a constant diameter that corresponds to the maximum diameter D (see Fig. 3) of the cutting head 12.

The axial length of the tip-side axial portion 34, which here corresponds to the axial distance A between the ledge 44 and the main cutting edge 24, is 10% of the maximum diameter D.

In an alternative embodiment, the axial distance A can be greater than 10% of the maximum diameter D.

Further, the undercut 38 has an axial length L corresponding to 10% of the maximum diameter D.

In an alternative embodiment, the axial length L of the undercut 38 can be more than 10% of the maximum diameter D.

The rear-facing blade 42 extends from a radially outer end 46, via which the rear-facing blade 42 abuts the tip-side axial portion 34, to a radially inner end 48 of the rear-facing blade 42.

The radially outer end 46 has a first radial distance r₁ from the axis of rotation R corresponding to half the maximum diameter D, while the radially inner end 48 has a second radial distance r₂ from the axis of rotation R that is approximately 44% of the maximum diameter D.

In an alternative embodiment, the second radial distance r₂ is less than 45% of the maximum diameter D.

The rear-facing blade 42 is formed by a rear-facing cutting edge 50 abutting a rear-facing chipping surface 52 and a rear-facing free surface 54.

The rear-facing chipping surface 52 is part of the main flute 28 of the corresponding main cutting edge 24 associated with undercut 38.

The rear-facing free surface 54 is inclined in relation to a plane E extending perpendicular to the axis of rotation R by a compound angle composed of an angle α and an angle β.

The angle α denotes the inclination towards plane E in the radial direction and is 2°, while the angle β denotes the inclination towards plane E in the circumferential direction and is 7°.

In an alternative embodiment, the angle α can be 1° to 5° and/or the angle β can be 5° to 10°.

Furthermore, the undercut 38 has a surface 56 abutting the rear-facing free surface 54 and extending from the ledge 44 at an angle γ of 15° opposite the axial direction up to the shaft-side axial portion 36.

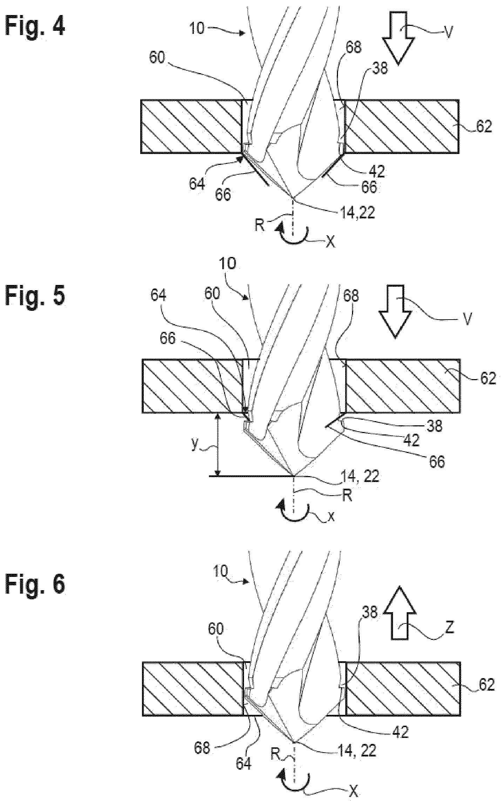

Figs. 4 to 6 describe how a through-hole 60 can be produced in a workpiece 62 by means of the rotary drilling tool 10.

In this regard, the workpiece 62 is a carbon fiber-reinforced plastic.

Of course, the method can be applied to workpieces 62 made of any material, in particular to workpieces 62 made of any fibrous material.

In a first step (see Fig. 4), the rotary drilling tool 10 is driven in a direction of rotation X and moved into the workpiece 62 in a feeding direction V in order to form the through-hole 60 by means of the main cutting edges 24 as well as the cross-cuts 32.

The rotary drilling tool 10 is passed through the workpiece 62 in the feeding direction V far enough that the cutting head 12 projects out of the outlet opening 64 of the through-hole 60.

The overrun Y (see Fig. 5) is selected large enough that the rear-facing blades 42 are arranged behind the through-hole 60 in the feeding direction V and are thus spaced apart from the outlet opening 64.

As a result, fibers 66 or portions of the workpiece 62 that were not separated during drilling of the through-hole 60 in the preceding step and protrude at the outlet opening 64 are engaged with the undercuts 38 and thus come into contact with the rear-facing blades 42.

In a subsequent step (see Fig. 6), the rotary drilling tool 10 is moved in the direction Z, i.e., counter to the feeding direction V, out of the workpiece 62, wherein the rotary drilling tool 10 is driven in the direction of rotation X.

The fibers 66 that were not separated during drilling of the through-hole 60 are separated by the rear-facing blades 42, and the drill-hole wall 68 of the through-hole 60 is machined.

Thus, after pulling out the rotary drilling tool 10, no fibers 66 or portions of the workpiece 62 protrude into the through-hole 60, in particular not at the outlet opening 64, and the drill-hole wall 68 is in particular smooth.

In this way, a rotary drilling tool 10 as well as a method is provided by means which through-holes 60 can be produced with particularly high quality and with little effort.

The rear-facing blades 42 ensure that fibers 66 and portions of the workpiece 62 that have not already been separated when drilling the through-hole 60 in the feeding direction V are reliably separated when pulling out the rotary drilling tool 10 counter to the feeding direction V.

As a result, no reworking of the through-hole 60 is required, in particular not with another tool.

The invention is not limited to the shown embodiment. Individual features of one embodiment can in particular be combined as desired with features of other embodiments, in particular independently of the other features of the corresponding embodiments.

## Claims

1. A rotary drilling tool (10) having an axis of rotation (R), a shaft (18), and a cutting head (12), which has at least one tip (22) and a front-facing main cutting edge (24) defining a maximum diameter (D) of the cutting head (12), **characterized in that** the cutting head (12) has a tip-side axial portion (34), a shaft-side axial portion (36), and at least one undercut (38) extending axially between the tip-side axial portion (34) and the shaft-side axial portion (36), wherein the undercut (38) has a radially inwardly springing ledge (44), which has a rear-facing blade (42) on a side facing away from the tip (22), which edge is provided for cutting when the rotary drilling tool (10) is pulled out of a workpiece (62).

2. The rotary drilling tool (10) according to claim 1, **characterized in that** the tip-side axial portion (34) extends axially from the inwardly springing ledge (44) towards the main cutting edge (24) and has the maximum diameter (D).

3. The rotary drilling tool (10) according to claim 1 or 2, **characterized in that** the rear-facing blade (42) extends from a radially outer end (46) of the rear-facing blade (42) to a radially inner end (48) of the rear-facing blade (42), wherein the radially outer end (46) has a first radial distance (r₁) from the axis of rotation (R), which corresponds to half the maximum diameter (D), and the radially inner end (48) has a second radial distance (r₂) from the axis of rotation (R), which is less than 45% of the maximum diameter (D).

4. The rotary drilling tool (10) according to any of the preceding claims, **characterized in that** the axial distance (A) between the inwardly springing ledge (44) and the main cutting edge (24) corresponds to at least 10% of the maximum diameter (D).

5. The rotary drilling tool (10) according to any of the preceding claims, **characterized in that** the rear-facing blade (42) has a rear-facing cutting edge (50) formed by a rear-facing chipping surface (52) and a rear-facing free surface (54), wherein the rear-facing free surface (54) is inclined in relation to a plane (E) extending perpendicular to the axis of rotation (R).

6. The rotary drilling tool (10) according to claim 5, **characterized in that** the rear-facing free surface (54) is inclined radially with respect to the plane (E) by an angle (α) between 1° and 5°, and/or **in that** the rear-facing free surface (54) is inclined circumferentially with respect to the plane (E) by an angle (β) between 5° and 10°.

7. The rotary drilling tool (10) according to any one of the preceding claims, **characterized in that** the undercut (38) has an axial length (L) that corresponds to at least 10% of the maximum diameter (D).

8. The rotary drilling tool (10) according to any one of the preceding claims, **characterized in that** the undercut (38) is part of a constriction (40), in particular having a V-shaped or U-shaped profile.

9. A method for producing a through-hole (60) in a workpiece (62), in particular from a fibrous material, by means of a rotary drilling tool (10) according to any one of the preceding claims, with the following steps:
a) drilling the through-hole (60) by means of the at least one main cutting edge (24) by driving the rotary drilling tool (10) in a direction of rotation (X) and moving into the workpiece (62) in a feeding direction (V), and
b) machining the resulting drill-hole wall (68) by means of the at least one rear-facing blade (42) by driving the rotary drilling tool (10) in the direction of rotation (X) and moving out of the workpiece (62) counter to the feeding direction (V).

10. The method according to claim 9, **characterized in that**, when drilling, the rotary drilling tool (10) is moved through the workpiece (62) with an overrun (Y), wherein the overrun (Y) is large enough so that the rear-facing blade (42) exits from the through-hole (60) in the feeding direction (V).
